# NEW EUROPEAN PATENT SPECIFICATION

(11) **EP 1 862 500 B2**
(45) Date of publication and mention of the opposition decision: **07.08.2013**
(45) Mention of the grant of the patent: 28.10.2009
(21) Application number: 06011133.3
(22) Date of filing: 30.05.2006
(51) Int. Cl.: C08K 5/00

(54) **A silicon containing compound as drying agent for polyolefin compositions**
Eine Silicon enthaltende Verbindung als Trocknungsmittel für Polyolefinzusammensetzungen
Composé contenant du silicium de dessication pour des compositions polyoléfines

(43) Date of publication of application: 05.12.2007
(73) Proprietor: Borealis Technology Oy, 06101 Porvoo (FI)
(72) Inventor: Carlsson, Roger, 42370 Säve (SE); Sultan, Bernt-Äke, 44442 Stenungsund (SE); Fagrell, Ola, 44445 Stenungsund (SE)
(74) Representative: Kador & Partner

(56) References cited:
- EP-A1- 1 394 199
- WO-A1-2006/054926
- DE-A1- 19 653 388
- US-A1- 2006 111 478

## Description

The present invention relates to the use of a silicon containing compound as drying agent for polyolefin compositions.

Polyolefin compositions often comprise several polymeric components, as for example polyolefin resins with different properties, such as different molecular weights, or different content of comonomer. Furthermore, organic and/or inorganic additives such as stabilizers are usually present in a polyolefin composition. The nature and amount of these polyolefin resins and these additives is dependent on the particular use a polyolefin composition is designed for.

Each of the different components a polyolefin composition is made of may comprise small amounts of water. In the step of compounding, the different components come together and the final composition is formed. Also the amounts of water present in the several components are added in the step of compounding.

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolysation of silane groups. A silane compound can be introduced as a cross-linkable group e.g. by grafting the silane compound onto a polyolefin, or by copolymerisation of olefin monomers and silane group containing monomers. Such techniques are known e.g. from US 4,413,066, US 4.297,310, US 4,351,876, US 4,397,981, US 4,446,283 and US 4,456,704.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The contents of this document is enclosed herein by reference.

If water is present in the step of compounding, hydrolysation of silane groups present in the polyolefin resin, and hence crosslinking of the resin, starts. However, crosslinking during compounding e.g. in an extruder is of course undesirable because this may lead to difficulties in the compounding step, e.g. caused by punctual uncontrolled increase in MFR of the composition, and may also negatively affect the properties of the compounded composition.

It is therefore desirable that the components and additives of a polyolefin composition containing crosslinkable groups contain as low water as possible before and during the step of compounding.

It is hence an object of the present invention to provide a drying agent for use in polyolefin compositions which deactivates the water present in the composition.

It has now surprisingly been found that the above object can be achieved by using a silicon containing compound as drying agent for a polyolefin composition according to claim 1.

The present invention therefore provides the use of a silicon containing compound as drying agent in the step of compounding done by estension for a polyolefin composition containing crosslinkable silane groups, wherein the silicon containing compound has a structure according to the formula

(R¹)ₓ[Si(R²)_{y}(R³)_{z}]ₘ (I)

wherein
R¹ is a linear or branched C₆-C₂₂ alkyl group;
R² is a linear or branched C₁-C₁₀ alkoxy group
R³, is -R⁴SiR¹ₚR²_{q}, wherein
   p is 0 to 3, preferably 0 to 2,
   q is 0 to 3, preferably 1 to 3,
   with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x + y + z = 4;
and m = 1, the amount of the silicon containing compound is 0.001-5wt% of the total composition; and
the composition further comprises a silanol condensation catalyst which is a Brönsted acid,
   wherein the silanol condensation catalyst and the silicon-containing compound are added to the polyolefin composition by compounding a masterbatch, which contains the silanol condensation catalyst in an amount of from 0.3 to 6 wt% and the silicon-containing compound in an amount of from 2 to 10 wt%.

The use according to the invention results in an improved behaviour of the polyolefin compositions in the step of compounding because it enables a so-called "self-drying" of the composition.

Preferably the drying agent is used for drying, i.e. removing, of water. The drying agent reacts with the water present in the composition. After addition of the drying agent to the polyolefin composition no measurable free water content exists in the composition.

Compounding of the polyolefin composition is done by extrusion.

It is found that such compositions in the extruder behave very similar to an thermoplastic material upon extrusion, i.e. there is virtually no drop in melt flow rate upon extrusion, and the retention time in the extruder is significantly decreased, when the silicon containing compound as described above is used as a drying agent.

Preferably, the silicon containing compound has a high compatibility with the polymer composition which means that even after treatment of the composition at elevated temperature for several hours the major part of the silicon containing compound does not volatise from the composition. The compatibility of the silicon containing compound can be adjusted by appropriate selection of, especially, group R¹, which should be chosen sufficiently large and non-polar.

More particularly, the silicon containing compound, preferably, is compatible with the composition insofar as it, when having been present in the composition in an initial amount corresponding to 0.060 mole hydrolysable groups per 1000 g composition, after a storage at 60 °C for 74 h in air is still present in the composition at least in an amount corresponding to 0.035 mole hydrolysable groups per 1000 g composition.

Further on, preferably, in formula (I) for the silicon containing compound:
R¹, which may be the same or different if more than one such group is present, is a linear or branched C₆- to C₂₂-alkyl, still more preferably is a C₈- to C₂₀-alkyl group.

Furthermore, in formula (I) for the silicon containing compound:
R², which may be the same or different if more than one such group is present, is a linear or branched C₁- to C₁₀-alkoxy, still more preferably is a C₁- to C₈-alkoxy, still more preferably is a C₁- to C₄-alkoxy, and most preferably is a methoxy, ethoxy, propoxy, or 1-butoxy group.

The alkyl moieties of R¹ and R² may be linear or branched.

R¹ and R² may comprise heteroatom substituents, however, preferably R¹ and R² are free of any heteroatom substituents.

Preferably, in formula (I) for compound (C) x = 1.

Furthermore, preferably in formula (I) y = 3.

Still further, preferably in formula (I) z = 0.

Finally, in formula (I) m = 1.

Preferred silicon containing compounds are also all those compounds which are combinations of any of the above-mentioned preferred embodiments for any of the parameters of formula (I).

In a particularly preferred embodiment, the silicon containing compound comprises, more preferably consists of, hexadecyl trimethoxy silane.

The amount of the silicon containing compound in the polyolefin composition is from 0.001 to 5 wt% of the total composition, preferably from 0.01 to 2.5 wt% of the total composition and most preferably from 0.5 to 1.5 wt% of the total composition.

The polyolefin composition for which the above described silicon containing compound is used as a drying agent comprises a crosslinkable polyolefin with hydrolysable silane groups, and further comprises a silanol condensation catalyst.

The silanol condensation catalysts of the polyolefin composition is a Brönsted acid, i.e. is a substance which acts as a proton donor.

Such Brönsted acids may comprise inorganic acids such as sulphuric acid and hydrochloric acid, and organic acids such as citric acid, stearic acid, acetic acid, sulphonic acid and alkanoic acids as dodecanoic acid, or a precursor of any of the compounds mentioned.

Preferably, the Brönsted acid is a sulphonic acid, more preferably an organic sulphonic acid.

Still more preferably, the Brönsted acid is an organic sulphonic acid comprising 10 C-atoms or more, more preferably 12 C-atoms or more, and most preferably 14 C-atoms or more, the sulphonic acid further comprising at least one aromatic group which may e.g. be a benzene, naphthalene, phenantrene or anthracene group. In the organic sulphonic acid, one, two or more sulphonic acid groups may be present, and the sulphonic acid group(s) may either be attached to a non-aromatic, or preferably to an aromatic group, of the organic sulphonic acid.

Further preferred, the aromatic organic sulphonic acid comprises the structural element:

Ar(SO₃H)ₓ (II)

with Ar being an aryl group which may be substituted or non-substituted, and x being at least 1.

The organic aromatic sulphonic acid silanol condensation catalyst may comprise the structural unit according to formula (II) one or several times, e.g. two or three times. For example, two structural units according to formula (II) may be linked to each other via a bridging group such as an alkylene group.

Preferably, Ar is a aryl group which is substituted with at least one C₄- to C₃₀-hydrocarbyl group, more preferably C₄- to C₃₀-alkyl group.

Aryl group Ar preferably is a phenyl group, a naphthalene group or an aromatic group comprising three fused rings such as phenantrene and anthracene.

Preferably, in formula (II) x is 1, 2 or 3, and more preferably x is 1 or 2.

Furthermore, preferably the compound used as organic aromatic sulphonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulphonic acid and tetrapropyl benzene sulphonic acid.

The silanol condensation catalyst may also be precursor of the sulphonic acid compound, including all its preferred embodiments mentioned, i.e. a compound that is converted by hydrolysis to such a compound. Such a precursor is for example the acid anhydride of a sulphonic acid compound, or a sulphonic acid that has been provided with a hydrolysable protective group, as e.g. an acetyl group, which can be removed by hydrolysis.

In a second preferred embodiment, the sulphonic acid catalyst is selected from those as described in EP 1 309 631 and EP 1 309 632, namely
a) a compound selected from the group of
   (i) an alkylated naphthalene monosulfonic acid substituted with 1 to 4 alkyl groups wherein each alkyl group is a linear or branched alkyl with 5 to 40 carbons with each alkyl group being the same or different and wherein the total number of carbons in the alkyl groups is in the range of 20 to 80 carbons;
   (ii) an arylalkyl sulfonic acid wherein the aryl is phenyl or naphthyl and is substituted with 1 to 4 alkyl groups wherein each alkyl group is a linear or branched alkyl with 5 to 40 carbons with each alkyl group being the same or different and wherein the total number of carbons in the alkyl groups is in the range of 12 to 80;
   (iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;
   (iv) a metal salt of (i) or (ii) wherein the metal ion is selected from the group consisting of copper, aluminium, tin and zinc; and
b) a compound selected from the group of
   (i) an alkylated aryl disulfonic acid selected from the group consisting of the structure (III): 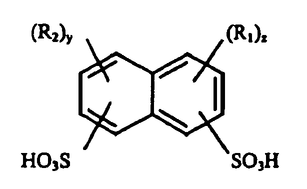 and the structure (IV): 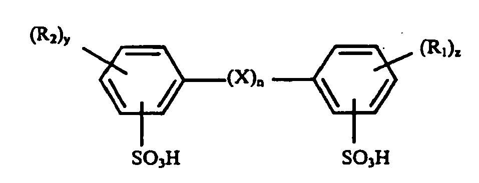 wherein each of R₁ and R₂ is the same or different and is a linear or branched alkyl group with 6 to 16 carbons, y is 0 to 3, z is 0 to 3 with the proviso that y + z is 1 to 4, n is 0 to 3, X is a divalent moiety selected from the group consisting of -C(R₃)(R₄)-, wherein each of R₃ and R₄ is H or independently a linear or branched alkyl group of 1 to 4 carbons and n is 1; -C(=O)-, wherein n is 1; -S-, wherein n is 1 to 3 and -S(O)₂-, wherein n is 1; and
   (ii) a derivative of (i) selected from the group consisting of the anhydrides, esters, epoxy blocked sulfonic acid esters, acetylates, and amine salts thereof which is a hydrolysable to the alkylated aryl disulfonic acid,
together with all preferred embodiments of those sulphonic acids as described in the mentioned European Patents.

Preferably, in the polyolefin composition the silanol condensation catalyst is present in an amount of 0.0001 to 6 wt%, more preferably of 0.001 to 2 wt%, and most preferably 0.02 to 0.5 wt%.

Preferably, the cross-linkable polyolefin comprises, still more preferably consists of, a polyethylene containing hydrolysable silane groups.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

Preferably, the silane group containing polyolefin has been obtained by copolymerisation. In the case of polyolefins, preferably polyethylene, the copolymerisation is preferably carried out with an unsaturated silane compound represented by the formula

R¹SiR²_{q}Y_{3-q} (V)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula

CH₂=CHSi(OA)₃ (VI)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin, e.g. ethylene, and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

If using a graft polymer, this may have been produced e.g. by any of the two methods described in US 3,646,155 and US 4,117,195, respectively.

The silane-group containing polyolefin preferably contains 0.001 to 15 wt% of the silane compound, more preferably 0.01 to 5 wt%, most preferably 0.1 to 2 wt%.

Such a polyolefin composition when extruded together with the above described silicon containing compound as a drying agent exhibits almost thermoplastic behaviour. This means, inter alia, that the melt flow rate of the composition does not significantly drop upon extrusion even at comparatively high temperatures.

Therefore, preferably the polyolefin composition has a MFR₂₁ (190 °C, 21.6 kg) of 50 g/10 min or more, more preferably 60 g/10 min or more, and most preferably 70 g/10 min or more when extruded at any temperature in the range of from 20 to 240 °C.

Furthermore, it is preferred that the MFR₂₁ (190 °C, 21.6 kg) of the composition when extruded at any temperature in the range of from 140 to 240 °C is 90 % or more, more preferably 95 % or more, of the MFR₂₁ (190 °C, 21.6 kg) of the same composition extruded without silanol condensation catalyst.

The polymer composition may further contain various additives, such as miscible thermoplastics, antioxidants, further stabilizers, lubricants, fillers, colouring agents and foaming agents.

As antioxidant, preferably a compound, or a mixture of such compounds, is used which is neutral or acidic, must comprise a sterically hindered phenol group or aliphatic sulphur groups. Such compounds are disclosed in EP 1 254 923 to be particularly suitable antioxidants for stabilisation of polyolefins containing hydrolysable silane groups which are crosslinked with a silanol condensation catalyst, in particular an acidic silanol condensation catalyst. Other preferred antioxidants are disclosed in WO2005003199A1.

Preferably, the antioxidant is present in the composition in an amount of from 0.01 to 5 wt%, more preferably 0.05 to 2 wt%, and most preferably 0.5 to 1.5 wt%.

The silanol condensation catalyst is added to the silane-group containing polyolefin by compounding the polymer with a so-called master batch, in which the catalyst, and optionally further additives are contained in a polymer, e.g. polyolefin, matrix in concentrated form.

The silanol condensation catalyst and the silicon containing compound are added to the silane group containing polyolefin by compounding a master batch, which contains the silanol condensation catalyst and the silicon containing compound in a polymer matrix in concentrated form, with the silane group containing polyolefin.

The matrix polymer is preferably a polyolefin, more preferably a polyethylene, which may be a homo- or copolymer of ethylene, e.g. low density polyethylene, or polyethylene-methyl-ethyl-butyl-acrylate copolymer containing 1 to 50 wt% of the acrylate, and mixtures thereof.

As stated, in the master batch the compounds to be added to the silane group containing polyolefin are contained in concentrated form, i.e. in a much higher amount than in the final composition.

The master batch comprises the silanol condensation catalyst in an amount of from 0.3 to 6 wt%, preferably from 0.7 to 3.5 wt%.

The silicon containing compound is present in the master batch in an amount of from 2 to 10 wt%.

The master batch preferably is processed with the silane group containing polymer in an amount of from 1 to 10 wt%, more preferably from 2 to 8 wt%.

Compounding may be performed by any known compounding process, including extruding the final product with a screw extruder or a kneader.

The following examples serve to further illustrate the present invention.

### Examples

### 1. Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C and may be determined at different loadings such as 2.16 kg (MFR₂) or 21.6 kg (MFR₂₁).

### b) Content of water

The content of water in polyethylene is measured using the coulometric Karl Fischer titration with Mettler instrument DL37 or Metrohm 684. It is calibrated with hydranal standard, sodium tartrate dihydrate, having a content of water of 15.66 % ± 0.05 %.

### 2. Compositions Produced

### a) Master batches

Master batches were produced comprising:
- a matrix resin: an ethylene butylacrylate copolymer with 17 wt% butylacrylate, a density of 924 kg/m³ and a MFR₂ of 7.0 g/10 min (OE6417 available from Borealis);
- a silanol condensation catalyst: linear dodecylbenzene sulphonic acid (DDBSA) has been used; or dibutyl tin dilaurate (DBTL) as a conventional silanol condensation catalyst;
- a silicon containing compound: hexadecyl trimethoxy silane (HDTMS),
- an antioxidant: 4-methyl-phenol reaction products with dicyclopentadiene and isobutylene (Ralox LC, CAS-no. 68610-51-5).

The components were used in the master batches in the amounts as indicated in Table 1 (wt%). Compounding of the master batches was performed using a Brabender kneader (small chamber, 47 cm³), and 3 mm thick plates were compression moulded at 180 °C.

**Table 1:**

| | Example 1 | Comparative Example 1 | Comparative Example 2 | Comparative Example 3 |
|---|---|---|---|---|
| Matrix | 88.5 | 92.5 | 90 | 87 |
| Sulphonic acid | 1.5 | 1.5 | - | - |
| DBTL | - | - | - | 3 |
| HDTMS | 4 | - | 4 | 4 |
| Antioxidant | 6 | 6 | 6 | 6 |

### b) Compositions

The master batches of Table 1 were processed in an amount of 5 wt% with 95 wt% of a silane group containing polyethylene having a density of 923 kg/m³, a MFR₂ of 0.9 g/10 min and a silane copolymer content of 1.3 wt% in a Brabender kneader followed by tape extrusion.

### c) Melt Flow Rate as Function of Temperature

The MFR₂₁ (190 °C, 21.6 kg) of the compositions of Example 1 and Comparative Examples 2 and 3 was measured before extrusion. Then, on a 60 mm Troester cable extruder with a PE screw having a compression ratio of 1 : 3.6, the material was extruded onto floor at different temperature settings. For each temperature setting the melt temperature was measured and samples collected. Directly after extrusion the MFR₂₁ was measured. The results are given in Table 2.

**Table 2:**

| Melt temperature/°C | Before extrusion | After extrusion | | | | | |
|---|---|---|---|---|---|---|---|
| | | 150 | 170 | 190 | 210 | 225 | 240 |
| Example 1 | 74 | 74 | 74 | 73 | 72 | 69 | 69 |
| Comparative Example 2 | 74 | 74 | 74 | 74 | 72 | 69 | 69 |
| Comparative Example 3 | 74 | 50 | 48 | 45 | 45 | 45 | 34 |

Example 1 is according to the invention. The comparison with Comparative Example 2 shows that the composition according to the invention behaves like a thermoplastic resin. Thus, no crosslinking occurs in the extruder, which can be seen in the constant MFR₂₁ level. Comparative Example 3 shows a composition which uses DBTL as a silanol condensation catalyst containing HDTMS demonstrating inferior behaviour as can be seen in the lowered MFR₂₁. Therefore, a combination of the right crosslinking catalyst and the drying agent according to the invention gives the best performance.

## Claims

1. Use of a silicon containing compound as drying agent in the step of compounding done by extrusion of a polyolefin composition comprising a crosslinkable polyolefin with hydrolysable silane groups, wherein the silicon containing compound has a structure according to the formula
(R¹)ₓ[Si(R²)_{y}(R³)_{z}]ₘ (I)
wherein
R¹ is a linear or branched C₆- to C₂₂-alkyl group;
R² is a linear or branched C₁- to C₁₀-alkoxy group;
R³, is -R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹- where R¹ and R² are as previously defined; and
x is 0 to 3, y is 1 to 4, z is 0 or 1, with the proviso that x + y + z = 4; and m = 1;
the amount of the silicon containing compound is 0.001 to 5 wt.-% of the total composition; and
the composition further comprises a silanol condensation catalyst which is a Brönsted acid,
wherein the silanol condensation catalyst and the silicon-containing compound are added to the polyolefin composition by compounding a masterbatch, which contains the silanol condensation catalyst in an amount of from 0.3 to 6 wt% and the silicon-containing compound in an amount of from 2 to 10 wt%.

2. Use according to claim 1 wherein in the formula for the silicon containing compound:
x=1, y=3, and z=0.

3. Use according to claim 1 or 2, wherein the silicon containing compound comprises hexadecyl trimethoxy silane.

4. Use according to any of the preceding claims wherein the crosslinkable polyolefin with hydrolysable silane groups comprises a polyethylene with hydrolysable silane groups.

5. Use according to claim 4 wherein in the crosslinkable polyolefin with hydrolysable silane groups the silane groups are present in an amount of 0.001 to 15 wt%.

6. Use according to claim 1 wherein the silanol condensation catalyst comprises an organic sulphonic acid.

7. Use according to claim 6, wherein the silanol condensation catalyst comprises an organic sulphonic acid comprising 10 C-atoms or more, the sulphonic acid further comprising at least one aromatic group.

8. Use according to any one of claims 6 or 7, wherein the silanol condensation catalyst comprises an organic sulphonic acid comprising the structural element:
Ar(SO₃H)ₓ (II)
with Ar being an aryl group which may be substituted or non-substituted, and x being at least 1.

9. Use according claim 8, wherein in formula (II) Ar is substituted with at least one C₄- to C₃₀-hydrocarbyl group and the total silanol condensation catalyst comprises from 10 to 200 C-atoms.

10. Use according to any one of claims 6 to 9, wherein the composition has a MFR₂₁ (190°C, 21.6 kg) of 50 g/10 min or more when extruded at any temperature in the range of from 20 to 240 °C.

11. Use according to any one of claims 6 to 10, wherein the MFR₂₁ (190 °C, 21.6 kg) of the composition when extruded at any temperature in the range of from 140 to 240°C is 90 % or more of the MFR₂₁ (190 °C, 21.6 kg) of the same composition without silanol condensation catalyst.

## Patentansprüche

1. Verwendung einer Silicium enthaltenden Verbindung als Trocknungsmittel beim Schritt des Vermengens, das durch Extrusion einer Polyolefinzusammensetzung vorgenommen wird, die ein vernetzbares Polyolefin mit hydrolysierbaren Silangruppen umfaßt, wobei die Silicium enthaltende Verbindung eine der folgenden Formel entsprechende Struktur aufweist
(R¹)ₓ[Si(R²)_{y}(R³)_{z}]ₘ (I)
worin
R¹ eine lineare oder verzweigte C₆-C₂₂-Alkylgruppe ist;
R² eine lineare oder verzweigte C₁-C₁₀-Alkoxygruppe ist;
R³-R⁴SiR¹ₚR²_{q} ist, wobei
p gleich 0 bis 3 ist,
q gleich 0 bis 3 ist,
mit der Maßgabe, daß p + q gleich 3 ist, und
R⁴-(CH₂)ᵣYₛ(CH₂)ₜ- ist, wobei r und t unabhängig voneinander 1 bis 3 sind, s gleich 0 oder 1 ist und Y ein difunktioneller heteroaromatischer Rest ist, der aus -O-, -S-, -SO-, -SO₂-, -NH-, -NR¹- oder -PR¹- ausgewählt ist, wobei R¹ und R² wie bereits angegeben sind; und
x gleich 0 bis 3 ist, y gleich 1 bis 4 ist, z gleich 0 oder 1 ist, mit der Maßgabe, daß x + y + z = 4 ist; und
m = 1 ist,
wobei die Menge der Silicium enthaltenden Verbindung 0,001 bis 5 Gew.-% der gesamten Zusammensetzung ausmacht und
die Zusammensetzung ferner einen Silanolkondensationskatalysator aufweist, der eine Brönsted-Säure ist;
wobei der Silanolkondensationskatalysator und die Silicium enthaltende Verbindung der Polyolefinzusammensetzung durch Vermengen einer Stammischung zugegeben werden, die den Silanolkondensationskatalysator in einer Menge von 0,3 bis 6 Gew.-% und die Silicium enthaltende Verbindung in einer Menge von 2 bis 10 Gew.-% enthält.

2. Verwendung nach Anspruch 1, wobei in der Formel für die Silicium enthaltende Verbindung:
x = 1, y = 3 und z = 0 sind.

3. Verwendung nach Anspruch 1 oder 2, wobei die Silicium enthaltende Verbindung Hexadecyltrimethoxysilan umfaßt.

4. Verwendung nach einem der vorstehenden Ansprüche, wobei das vernetzbare Polyolefin mit hydrolysierbaren Silangruppen ein Polyethylen mit hydrolysierbaren Silangruppen umfaßt.

5. Verwendung nach Anspruch 4, wobei in dem vernetzbaren Polyolefin mit hydrolysierbaren Silangruppen die Silangruppen in einer Menge von 0,001 bis 15 Gew.-% vorliegen.

6. Verwendung nach Anspruch 1, wobei der Silanolkondensationskatalysator eine organische Sulfonsäure umfaßt.

7. Verwendung nach Anspruch 6, wobei der Silanolkondensationskatalysator eine organische Sulfonsäure mit 10 oder mehr C-Atomen umfaßt, wobei die Sulfonsäure ferner zumindest einen aromatischen Rest aufweist.

8. Verwendung nach einem der Ansprüche 6 oder 7, wobei der Silanolkondensationskatalysator eine organische Sulfonsäure umfaßt, die das Strukturelement
Ar(SO₃H)ₓ (II)
aufweist, worin
Ar eine Arylgruppe ist, die substituiert oder unsubstituiert sein kann, und x mindestens 1 beträgt.

9. Verwendung nach Anspruch 8, wobei in der Formel (II) Ar mit zumindest einem C₄-C₃₀-Kohlenwasserstoffrest substituiert ist und der gesamte Silanolkondensationskatalysator 10 bis 200 C-Atome aufweist.

10. Verwendung nach einem der Ansprüche 6 bis 9, wobei die Zusammensetzung einen MFR₂₁-Wert (190°C, 21,6 kg) von 50 g/10 min oder mehr aufweist, wenn sie bei irgendeiner Temperatur im Bereich von 20 bis 240°C extrudiert wird.

11. Verwendung nach einem der Ansprüche 6 bis 10, wobei der MFR₂₁-Wert (190°C, 21,6 kg) der Zusammensetzung, wenn sie bei irgendeiner Temperatur im Bereich von 140 bis 240°C extrudiert wird, 90 % oder mehr des MFR₂₁-Wertes (190°C, 21,6 kg) der gleichen Zusammensetzung ohne Silanolkondensationskatalysator beträgt.

## Revendications

1. Utilisation d'un composé contenant du silicium comme agent de séchage dans l'étape de préparation réalisée par extrusion d'une composition de polyoléfine comprenant une polyoléfine réticulable avec des groupes silane hydrolysables, dans laquelle le composé contenant du silicium possède une structure selon la formule
(R¹)ₓ[Si(R²)_{y}(R³)_{z}]ₘ (I)
dans laquelle
R¹ est un groupe alkyle linéaire ou ramifié en C₆ à C₂₂ ;
R² est un groupe alcoxy linéaire ou ramifié en C₁ à C₁₀ ;
R³, est -R⁴SiR¹ₚR²_{q}, dans laquelle
p va de 0 à 3,
q va de 0 à 3,
à condition que p + q soit égal à 3, et
R⁴ est -(CH₂)ᵣYₛ(CH₂)ₜ- où r et t vont indépendamment de 1 à 3, s est égal à 0 ou 1 et Y est un groupe hétéroatomique difonctionnel choisi parmi -O-, -S-, -SO-, -SO₂-, -NH-, -NR¹- ou -PR¹-, où R¹ et R² sont tels que définis précédemment ; et
x va de 0 à 3, y va de 1 à 4, z est égal à 0 ou 1, à condition que x + y + z = 4 ;
et m = 1 ;
la quantité de composé contenant du silicium va de 0,001 à 5 % en poids de la composition totale ; et
la composition comprend en outre un catalyseur de condensation de silanol qui est un acide de Brönsted,
dans laquelle le catalyseur de condensation de silanol et le composé contenant du silicium sont ajoutés à la composition de polyoléfine en préparant un mélange maître, qui contient le catalyseur de condensation de silanol en une quantité allant de 0,3 à 6 % en poids et le composé contenant le silicium en une quantité allant de 2 à 10 % en poids.

2. Utilisation selon la revendication 1, dans laquelle dans la formule pour le composé contenant du silicium :
x = 1, y = 3 et z = 0.

3. Utilisation selon les revendications 1 ou 2, dans laquelle le composé contenant du silicium comprend de l'hexadécyl triméthoxy silane.

4. Utilisation selon l'une quelconque des revendications précédentes, dans laquelle la polyoléfine réticulable avec les groupes silane hydrolysables comprend un polyéthylène avec des groupes silane hydrolysables.

5. Utilisation selon la revendication 4, dans laquelle dans la polyoléfine réticulable avec des groupes silane hydrolysables, les groupes silane sont présents en une quantité allant de 0,001 % à 15 % en poids.

6. Utilisation selon la revendication 1, dans laquelle le catalyseur de condensation de silanol comprend un acide sulfonique organique.

7. Utilisation selon la revendication 6, dans laquelle le catalyseur de condensation au silanol comprend un acide sulfonique organique comprenant 10 atomes de carbone ou plus, l'acide sulfonique comprenant en outre au moins un groupe aromatique.

8. Utilisation selon l'une quelconque des revendications 6 ou 7, dans laquelle le catalyseur de condensation au silanol comprend un acide sulfonique organique comprenant l'élément structural :
Ar(SO₃H)ₓ (II)
avec Ar étant un groupe aryle qui peut être substitué ou non substitué, et x étant au moins égal à 1.

9. Utilisation selon la revendication 8, dans laquelle dans la formule (II) Ar est substitué par au moins un groupe hydrocarbyle en C₄ à C₃₀ et le catalyseur de condensation au silanol total comprend de 10 à 200 atomes de C.

10. Utilisation selon l'une quelconque des revendications 6 à 9, dans laquelle la composition possède un MFR₂₁ (190 °C, 21,6 kg) de 50 g/10 min. ou plus quand elle est extrudée à une température quelconque située dans la plage allant de 20 °C à 240°C.

11. Utilisation selon l'une quelconque des revendications 6 à 10, dans laquelle le MFR₂₁ (190 °C, 21,6 kg) de la composition quand elle est extrudée à une température quelconque située dans la plage allant de 140 °C à 240 °C est de 90 % ou plus du MFR₂₁ (190 °C, 21,6 kg) de la même composition sans catalyseur de condensation au silanol.
